# FASCICULE DE BREVET EUROPEEN

(11) **EP 0 570 578 B1**
(45) Date de publication et mention de la délivrance du brevet: **13.09.1995**
(21) Numéro de dépôt: 93902303.2
(22) Date de dépôt: 07.12.1992
(51) Int. Cl.: B31F 1/07, B31F 5/02, B32B 31/00

(54) **PROCEDE DE FABRICATION DE FEUILLES GAUFREES STRATIFIEES, MACHINE POUR SA MISE EN OEUVRE**
VERFAHREN UND VORRICHTUNG ZUR HERSTELLUNG VON GEPRÄGTEN VERBUNDFOLIEN
PROCESS AND MACHINE FOR THE MANUFACTURE OF EMBOSSED LAMINATED FILM

(30) Priorité: 09.12.1991 FR 9115208
(43) Date de publication de la demande: 24.11.1993
(73) Titulaire: KAYSERSBERG, F-68240 Kaysersberg (FR)
(72) Inventeur: RUPPEL, Rémy, F-68320 Durrenentzen (FR); LAURENT, Pierre, F-68000 Colmar (FR); HUNGLER, Joel, F-68320 Urschenheim (FR)
(74) Mandataire: David, Daniel
(86) Numéro de dépôt international: FR9201155
(87) Numéro de publication internationale: WO9311929

(56) Documents cités:
- AU-B- 3 412 368
- FR-A- 2 075 452
- FR-A- 2 252 212
- GB-A- 1 135 928
- GB-A- 1 420 139
- US-A- 3 867 225
- US-A- 3 868 205
- US-A- 4 376 671
- US-A- 4 483 728

## Description

La présente invention concerne un procédé de fabrication de feuilles stratifiées de produits cellulosiques gaufrés, en particulier le papier absorbant, ainsi que la machine pour sa mise en oeuvre.

Il est connu par le brevet US 3867225, un procédé de fabrication de feuilles stratifiées de produits cellulosiques gaufrés destinées à être utilisées comme serviettes, essuie-tout, etc...

Ce procédé consiste à gaufrer séparément deux feuilles de papier absorbant avec un motif de protubérances de hauteur comprise entre 0,25 et 1,25 mm et une densité de 3 à 20 protubérances par cm².

Le gaufrage est effectué au moyen d'un groupe de gaufrage comprenant un cylindre en caoutchouc et un cylindre métallique gravé. Une des feuilles est enduite de colle, puis elle est associée à l'autre, selon le mode d'assemblage connu sous le nom "nested" - emboîté - au moyen d'un cylindre marieur disposé parallèlement à l'un des cylindres gravés avec application d'une pression de l'ordre de 900 à 1000 kg par mètre linéaire. Ce cylindre marieur peut être constitué d'un cylindre métallique recouvert d'une fine couche de caoutchouc ayant une dureté de 90 shore A. Dans un tel dispositif le cylindre métallique gravé appuie la feuille stratifiée contre le cylindre marieur en caoutchouc et provoque, par ce fait, une déformation du caoutchouc. Cette déformation engendre ainsi des bossages non désirés à la surface de la feuille stratifiée.

Cette inversion des motifs a pour inconvénient de diminuer la douceur et la régularité dans le temps du produit ainsi obtenu. En outre, la pression exercée par le cylindre en caoutchouc écrase les points de colle ; il s'ensuit une migration de cette dernière à travers la feuille et un encrassement du cylindre marieur.

Dans ce brevet, il est certes évoqué la possibilité d'utiliser un cylindre métallique à surface lisse pour le cylindre marieur, sans aucun revêtement, mais il est considéré que cette solution présente des inconvénients car elle entraîne une déformation par écrasement des protubérances du cylindre gravé.

Un but de l'invention est donc de proposer un procédé et une machine permettant de palier les inconvénients de l'art antérieur.

Ce but est atteint par un procédé de fabrication de feuilles stratifiées gaufrées selon la revendication 1.

Le matériau utilisé de préférence pour constituer le cylindre marieur est l'acier mais tout autre matériau présentant une dureté équivalente pourra être utilisé.

Selon une autre particularité, la distance minimale entre les deux cylindres est comprise entre 0,01 mm et 0,1 mm, le choix dépendant de l'épaisseur des feuilles à assembler.

Selon un premier mode de réalisation, le cylindre marieur est à surface lisse.

Selon un deuxième mode de réalisation, le cylindre marieur présente des protubérances en surface et est entraîné en phase avec le cylindre gravé de sorte que le serrage des deux feuilles soit assuré par les sommets des protubérances respectives des deux cylindres.

La présente invention apparaîtra plus clairement à la lecture de la description ci-après faite en référence aux dessins annexés dans lesquels :

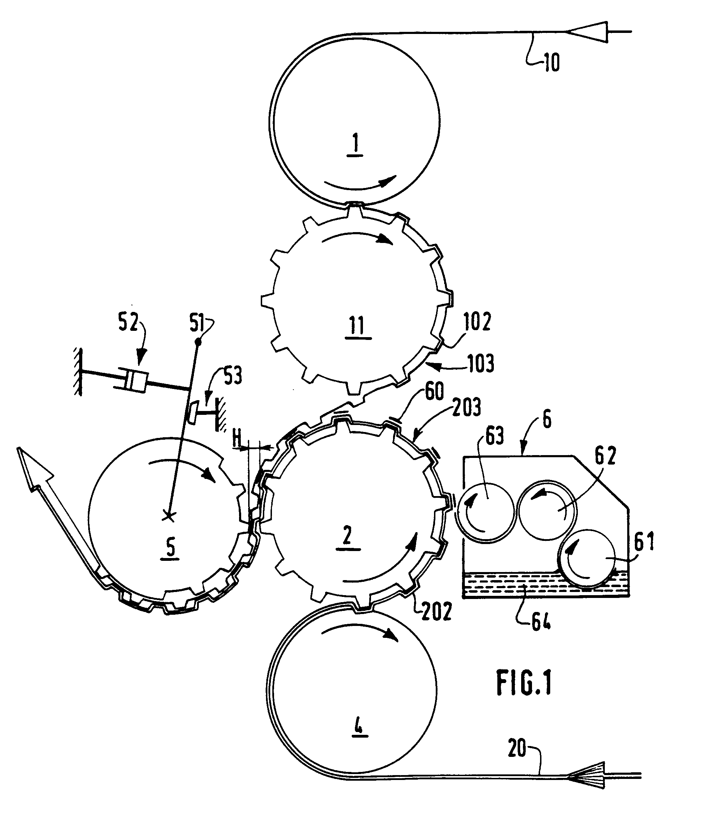

- la Figure 1 représente une vue latérale d'une machine pour la mise en oeuvre de l'invention ;
- la Figure 2 représente une vue en coupe partielle de la partie de la machine permettant l'assemblage des deux feuilles gaufrées, le cylindre marieur étant lui-même gravé ;
- la Figure 3 représente une vue en coupe partielle d'un dispositif de l'art antérieur ;
- la Figure 4 représente une vue en coupe partielle d'une feuille stratifiée au cours de son assemblage au moyen d'un cylindre marieur lisse ;
- la Figure 5 représente une vue en coupe partielle d'une feuille au cours de son assemblage au moyen d'un cylindre marieur gravé ;
La machine comporte un premier ensemble (1, 11) permettant de gaufrer une feuille (10) en matériau cellulosique, grâce aux gravures figurant sur un cylindre métallique (11) qui appuie en tournant sur un cylindre en caoutchouc (1) sur lequel passe la feuille (10). De préférence, le motif des protubérances du cylindre gravé est du type utilisé pour les applications d'essuyage. Les protubérances ont une hauteur de l'ordre de 0,3 mm à 2 mm et sont au nombre de 3 à 20 protubérances par cm². Après gaufrage la feuille (103) obtenue présente des bossages (102). La feuille (103) est ensuite amenée en vis-à-vis d'une deuxième feuille gaufrée (203). Cette dernière (203) est produite à partir d'une feuille de matière cellulosique (20) qui passe sur un cylindre en caoutchouc (4). Dans l'exemple représenté qui est non limitatif, la feuille (20) est elle-même constituée d'un empilement de deux feuilles simples. Le cylindre en caoutchouc (4) appuie la feuille (20) sur les gravures d'un deuxième cylindre gravé (2), de façon à constituer une feuille gaufrée (203) comportant des bossages (202). Cette deuxième feuille (203) est emboîtée avec la première feuille (10) en amenant les deux feuilles en contact tangentiel, et en phase pour ce qui concerne les bossages, entre, d'une part le deuxième cylindre gravé (2) et un cylindre marieur (5) en acier qui peut être soit gravé, soit lisse.

Préalablement à la mise en contact des deux feuilles et à leur emboîtement, on dépose sur les bossages (202) de la surface externe de l'une des feuilles, en l'occurrence la deuxième (203), des points de colle (60) à l'aide d'un dispositif d'encollage (6). Ce dispositif d'encollage comporte un bac, contenant la colle (64), dans lequel baigne un premier rouleau (61) qui par contact tangentiel avec un deuxième rouleau (62) dépose un film de colle sur ce deuxième rouleau (62). Ce deuxième rouleau (62), entraîné en rotation par un troisième rouleau (63), dépose un film de colle sur ce troisième rouleau (63) qui lui-même vient déposer les points de colle sur les bossages du papier gaufré par la gravure du cylindre (2).

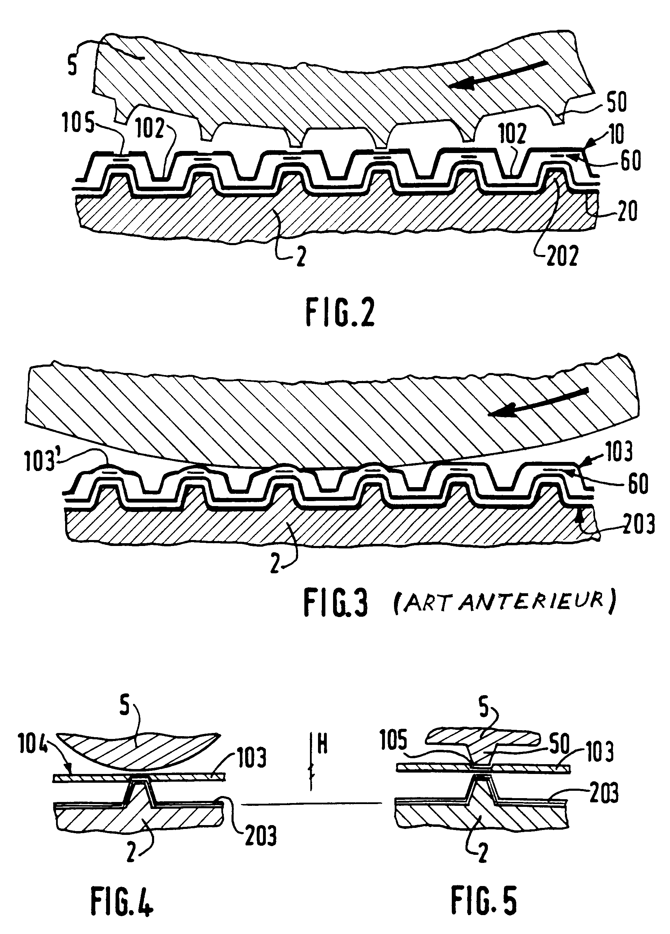

La Figure 4 représente le type de produit obtenu par un dispositif comportant un cylindre marieur (5) lisse en association avec un cylindre gaufreur (2). Dans ce cas la première feuille (103) est appliquée sur la deuxième feuille (203) sans déformation de la surface extérieure (104) de la première feuille (103). Dans le cas où le cylindre marieur (5) est également gravé (Figures 2 et 5), celui-ci est prévu de façon que les protubérances (50) du cylindre marieur (5) tombent en vis-à-vis de celles du cylindre gaufreur (2), produisant un motif pointe-pointe avec une légère déformation (105) vers l'intérieur de l'assemblage de la feuille gaufrée.

Dans les deux cas, quel que soit le type de cylindre lisse ou gravé, la distance H séparant la génératrice extérieure du cylindre marieur de celle constituée par les sommets des protubérances du cylindre gravé (2) doit être maintenue constante à une valeur comprise entre 0,01 mm et 0,1 mm. De préférence, cette valeur sera choisie égale à 0,05 mm au jeu près de tolérance de fabrication d'un cylindre marieur lisse, ce jeu de tolérance étant de plus ou moins 0,01 mm.

Dans la pratique, le cylindre (5) peut basculer autour d'un axe (51) parallèle à son axe de rotation et est poussé en direction du cylindre (2) au moyen de vérins appropriés (52). La distance H est ajustée au moyen de butées réglables (53). En fonctionnement, la pression exercée par les vérins est suffisante pour maintenir le cylindre (5) en appui contre les butées (53).

Une telle machine permet d'éviter les inconvénients évoqués par les dispositifs de l'art antérieur et représentés à la Figure 3, à savoir, d'une part les déformations (103') vers l'extérieur en surface de la feuille stratifiée obtenue, et d'autre part des arrêts fréquents de la machine pour nettoyage, par suite du transfert de la colle provoquant l'encrassement du cylindre marieur.

D'autres avantages du procédé selon l'invention sont une très bonne association des plis, une possibilité d'association partielle selon les motifs de gravure du cylindre marieur (5) et du cylindre gaufreur (2), de façon que l'association ne soit pas forcément sur toute la surface du gaufrage produit par le cylindre gaufreur (2).

La machine ainsi constituée permet d'obtenir des feuilles gaufrées plus épaisses que dans les procédés traditionnels, ayant une douceur maximale et une tenue régulière dans le temps.

En outre, grâce à la réservation d'un jeu minimum entre le cylindre marieur et le cylindre gaufreur, on réduit considérablement l'usure de ce dernier

## Revendications

1. Procédé de fabrication de feuilles stratifiées gaufrées consistant à gaufrer séparément une première (10) et une deuxième (20) feuille au moyen d'un premier et deuxième dispositif de gaufrage comprenant chacun un cylindre caoutchouc (1,4) et un cylindre gravé (2,11) comportant un motif de protubérances de hauteur comprise entre 0,3 et 2 mm et de densité comprise entre 3 et 20 protubérances au cm², à appliquer au moins partiellement, un adhésif sur les sommets des protubérances (202) formées sur l'une des feuilles et à assembler les deux feuilles au moyen d'un cylindre marieur (5) disposé parallèlement à l'un desdits cylindres gravés de sorte que leurs protubérances, soient emboîtées, le cylindre marieur (5) étant métallique ou en autre matériau de dureté équivalente, caractérisé en ce que le cylindre marieur (5) est maintenu en butée à une distance minimale prédéterminée dudit cylindre gravé (2).

2. Procédé selon la revendication 1 caractérisé en ce que ladite distance est comprise entre 0,01 mm et 0,1 mm.

3. Procédé selon la revendication 1 ou 2 caractérisé en ce que le cylindre marieur (5) est à surface lisse.

4. Procédé selon la revendication 1 ou 2 caractérisé en ce que le cylindre marieur (5) présente des protubérances (50) et est entraîné en phase avec ledit cylindre gravé (2) de sorte que les sommets des protubérances respectives des deux cylindres soient en vis-à-vis dans l'intervalle de liaison des deux feuilles.

5. Machine pour la mise en oeuvre du procédé selon l'une des revendications précédentes comprenant un premier et un deuxième dispositif de gaufrage et un cylindre marieur (5) associé au cylindre gravé (2,11) de l'un desdits dispositifs pour l'assemblage de deux feuilles (10,20) ayant été préalablement gaufrées, ledit cylindre marieur (5) étant metallique ou en autre matériau du dureté équivalente, caractérisée en ce que la machine comprend un moyen de butée (53) permettant de maintenir le cylindre marieur à une distance minimale prédéterminée dudit cylindre gravé.

6. Machine selon la revendication 5 caractérisée en ce que la butée (53) est réglable.

## Claims

1. Method for manufacturing laminated embossed sheets, consisting of separately embossing a first (10) and a second (20) sheet by means of a first and a second embossing device each comprising a rubber cylinder (1, 4) and an engraved cylinder (2, 11) having a pattern of protuberances of between 0.3 mm and 2 mm in height and a density of between 3 and 20 protuberances per cm², applying, at least partially, an adhesive on the apexes of the protuberances (202) formed on one of the sheets and joining the two sheets by means of a bonding cylinder (5) disposed parallel to one of the said engraved cylinders so that their protuberances are nested, the bonding cylinder (5) being metal or made from another material of equivalent hardness, characterized in that the bonding cylinder (5) is held in abutment at a predetermined minimum distance from the said engraved cylinder (2).

2. Method according to Claim 1, characterized in that the said distance is between 0.01 mm and 0.1 mm.

3. Method according to Claim 1 or 2, characterized in that the bonding cylinder (5) has a smooth surface.

4. Method according to Claim 1 or 2, characterized in that the bonding cylinder (5) has protuberances (50) and is driven in phase with the said engraved cylinder (2) so that the apexes of the respective protuberances of the two cylinders are opposite during the period when the two sheets are joined together.

5. Machine for implementing the method according to one of the preceding claims, comprising a first and a second embossing device and a bonding cylinder (5) associated with the engraved cylinder (2, 11) of one of the said devices for joining two sheets (10, 20) which have previously been embossed, the said bonding cylinder (5) being metal or made from another material of equivalent hardness, characterized in that the machine comprises a stop means (53) enabling the bonding cylinder to be kept at a predetermined minimum distance from the said engraved cylinder.

6. Machine according to Claim 5, characterized in that the stop (53) is adjustable.

## Patentansprüche

1. Verfahren zur Herstellung von geschichteten und geprägten Blättern, bei welchem unabhängig voneinander ein erstes (10) und ein zweites (20) Blatt mittels einer ersten und einer zweiten Einrichtung zum Prägen gepreßt wird, wobei jede Einrichtung eine Gummiwalze (1, 4) sowie eine geprägte Walze (2, 11) mit einem durch Erhebungen mit einer Hohe von 0,3 bis 2 mm und einer Dichte von 3 bis 20 Erhebungen pro cm² gebildeten Motiv aufweist; zumindest teilweise ein Klebstoff auf die Scheitelpunkte der auf einem der Blätter ausgebildeten Erhebungen (202) aufgebracht wird; und die zwei Blätter mittels einer Druckwalze (5), die parallel zu einer geprägten Walze angeordnet ist, in der Weise zusammengefügt werden, daß ihre Erhebungen verschachtelt sind, wobei die Druckwalze (5) aus Metall oder einem anderen Material mit vergleichbarer Härte gebildet ist, dadurch gekennzeichnet, daß die Druckwalze (5) an einem Anschlag mit einem vorbestimmten minimalen Abstand zu der geprägten Walze (2) gehalten ist.

2. Verfahren nach Anspruch 1,
dadurch gekennzeichnet, daß der genannte Abstand zwischen 0,01 und 0,1 mm liegt.

3. Verfahren nach Anspruch 1 oder 2,
dadurch gekennzeichnet, daß die Druckwalze (5) eine glatte Oberfläche aufweist.

4. Verfahren nach Anspruch 1 oder 2,
dadurch gekennzeichnet, daß die Druckwalze (5) Erhebungen (50) aufweist und in Phase mit der geprägten Walze (2) in der Weise angetrieben wird, daß die Scheitelpunkte der entsprechenden Erhebungen der zwei Walzen während des Zusammenfügens der zwei Blätter gegenüberliegen.

5. Vorrichtung zur Herstellung eines Werkes mit einem Verfahren nach einem der vorhergehenden Ansprüche, mit einer ersten und einer zweiten Prägeeinrichtung und einer Druckwalze (5), die einer geprägten Walze (2, 11) einer Einrichtung zum Zusammenfügen der zwei Blätter (10, 20) zugeordnet ist, bevor diese mit einem Muster geprägt werden, wobei die Druckwalze (5) aus Metall oder einem anderen Material mit vergleichbarer Härte ist,
dadurch gekennzeichnet, daß die Vorrichtung einen Anschlag (53) aufweist, mit dem die Druckwalze in einem vorbestimmten minimalen Abstand von der geprägten Walze gehalten wird.

6. Vorrichtung nach Anspruch 5,
dadurch gekennzeichnet, daß der Anschlag (53) einstellbar ist.
